Europäisches Patentamt

European Patent Office

Office européen des brevets

(11) Publication number: **0 007 231**
B1

## EUROPEAN PATENT SPECIFICATION

(45) Date of publication of patent specification: **03.03.82**

(51) Int. Cl.³: **B 65 G 47/31**, B 65 H 33/12

(21) Application number: **79301372.3**

(22) Date of filing: **12.07.79**

(54) Conveyor apparatus for grouping articles into batches.

(30) Priority: **17.07.78 JP 86985/78**

(43) Date of publication of application:
**23.01.80 Bulletin 80/2**

(45) Publication of the grant of the patent:
**03.03.82 Bulletin 82/9**

(84) Designated Contracting States:
**CH DE FR GB IT NL**

(56) References cited:
**BE - A - 709 267**
**DE - C - 642 249**
**FR - A - 1 393 472**
**FR - A - 2 057 880**
**FR - A - 2 286 770**
**FR - A - 2 391 126**
**GB - A - 734 272**
**GB - A - 788 499**

(73) Proprietor: **MITSUBISHI JUKOGYO KABUSHIKI KAISHA**
**5-1, Marunouchi 2-chome Chiyoda-ku Tokyo (JP)**

(72) Inventor: **Hirakawa, Tadashi**
**934-2, Nakano-cho**
**Mihara-shi, Hiroshima-ken (JP)**
Inventor: **Yoshikawa, Kiyomitsu**
**3552, Nakano-cho**
**Mihara-shi, Hiroshima-ken (JP)**
Inventor: **Kusubayashi, Toshiaki**
**1297-3, Mumata-cho**
**Mihara-shi, Hiroshima-ken (JP)**

(74) Representative: **Sommerville, John Henry et al,**
**SOMMERVILLE & RUSHTON 89 St. Peters Street**
**St. Albans, Hertfordshire AL1 3EN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Conveyor apparatus for grouping articles into batches .

The present invention relates in general to conveyor apparatus, and more particularly to conveyor apparatus for grouping sheet-like articles supplied continuously from a preceding stage into batches of the kind comprising an endless belt conveyor and separation means.

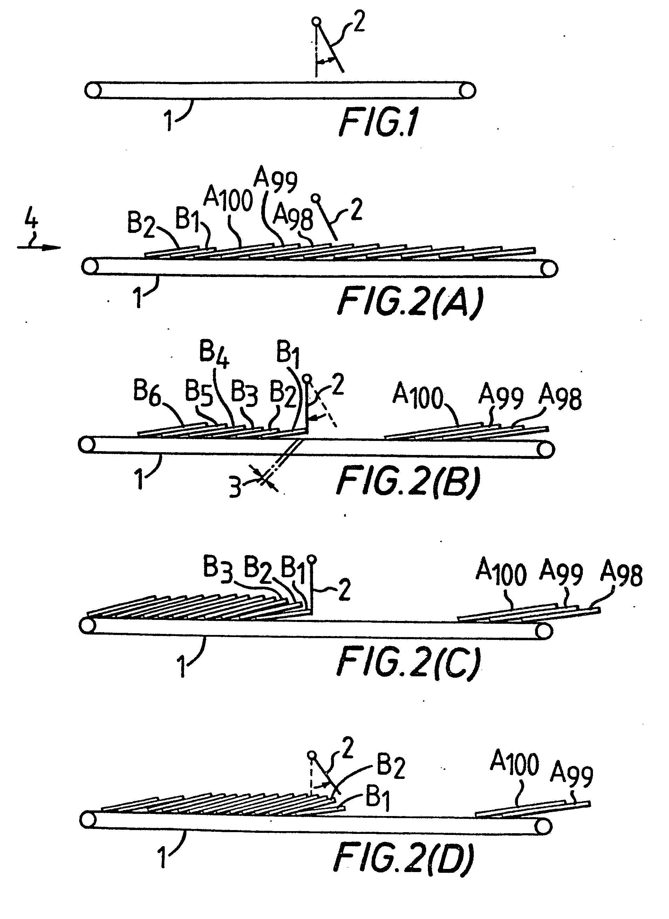

Heretofore, grouping of sheet-like articles supplied continuously has been carried out by various forms of apparatus, examples of which are shown in Figures 1 to 5. Thus, referring to Figure 1, one example of prior art apparatus comprises a conveyor and separation means in the form of a stopper plate 2. As shown in Figures 2(A), 2(B), 2(C) and 2(D), in this example sheet-like articles supplied at a predetermined speed in the direction shown by an arrow 4 are grouped into a preceding batch (......$A_{98}$, $A_{99}$, $A_{100}$) and a succeeding batch ($B_1$, $B_2$, $B_3$,...) by opening and closing operations of a stopper plate 2 for temporarily stopping (i.e. interrupting) the conveyance of the articles making up the succeeding batch. However, in use of this example of prior art apparatus, it may happen that, depending upon the timing of operation of the stopper plate 2 or adjustment of a gap clearance 3 between said plate and the conveyor (see Figure 2(B)), a sheet-like article $A_{100}$ intended for the preceding batch may be grouped into the succeeding batch, and hence accurate grouping cannot be relied upon. In addition, since the succeeding batch of sheet-like articles is temporarily stopped by the stopper plate 2, there are disadvantages that the leading edge of the first sheet-like article $B_1$ in the succeeding batch may be damaged, and that the degree of overlap can increase and vary as shown in Figure 2(C); thereby alignment of the sheet-like articles is degraded.

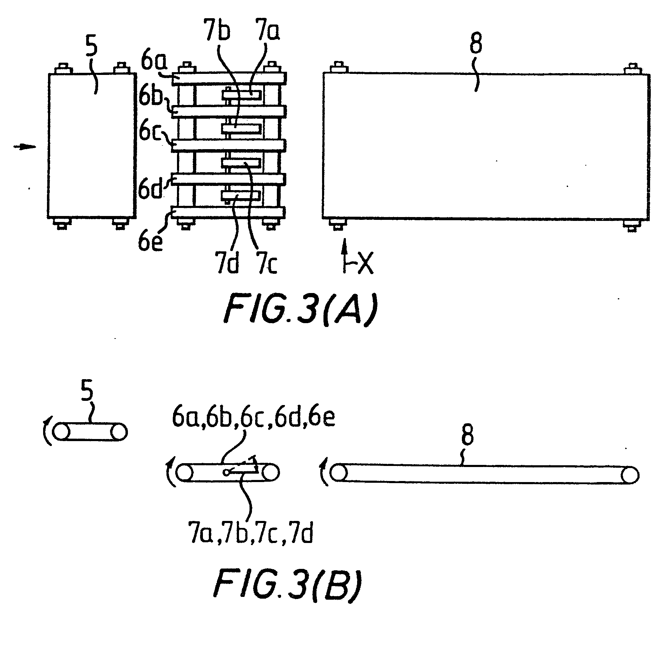

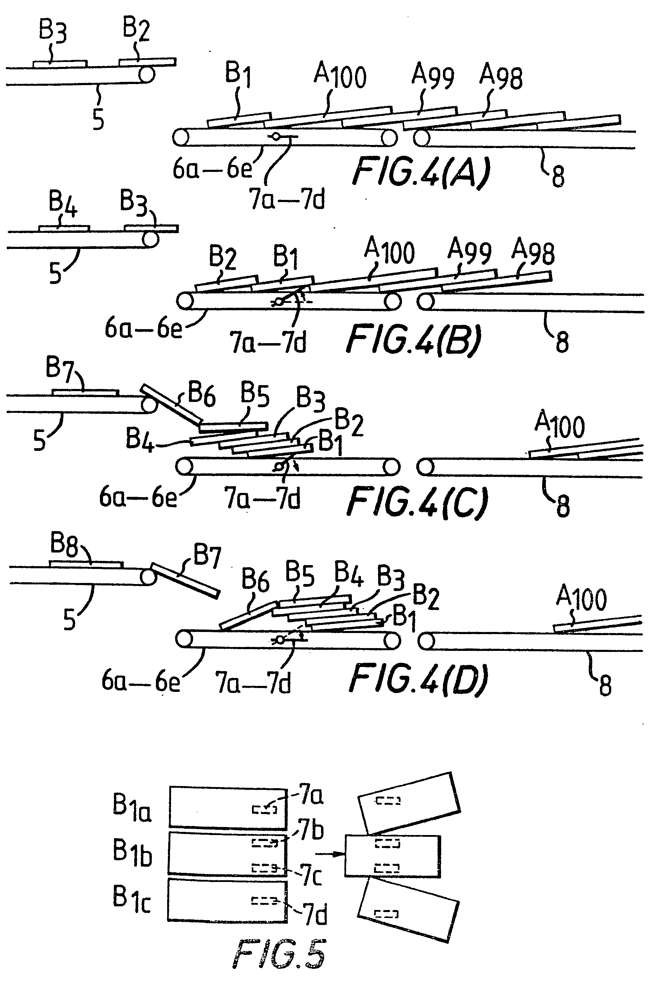

Another example of prior art apparatus is shown in Figures 3(A), 3(B), 4(A), 4(B), 4(C) and 4(D) and comprises a feeding conveyor 5, grouping conveyors 6a, 6b, 6c, 6d and 6e, and separation means in the form of stopper plates or fingers 7a, 7b, 7c and 7d and a feeding conveyor 8, the feeding conveyor 5 being operated at a high speed compared with the grouping conveyors 6a-6e and the feeding conveyor 8; the lower speed of these latter conveyors is generally about 20 to 50% of the speed of the feeding conveyor 5.

In operation of this apparatus, see Figures 4(A), 4(B), 4(C) and 4(D), sheet-like articles are grouped into batches A and B; at the moment when the last article $A_{100}$ in the preceding batch A (....$A_{98}$, $A_{99}$, $A_{100}$) has passed stopper fingers 7a to 7d, these fingers are raised to push up the first article $B_1$ in the succeeding batch B ($B_1$, $B_2$, $B_3, \frac{1}{2}$...) (see figure 4(b)). Thus, the succeeding batch B is stopped by the frictional force acting between the stopper fingers and the first article $B_1$ as shown in Figure 4(C).

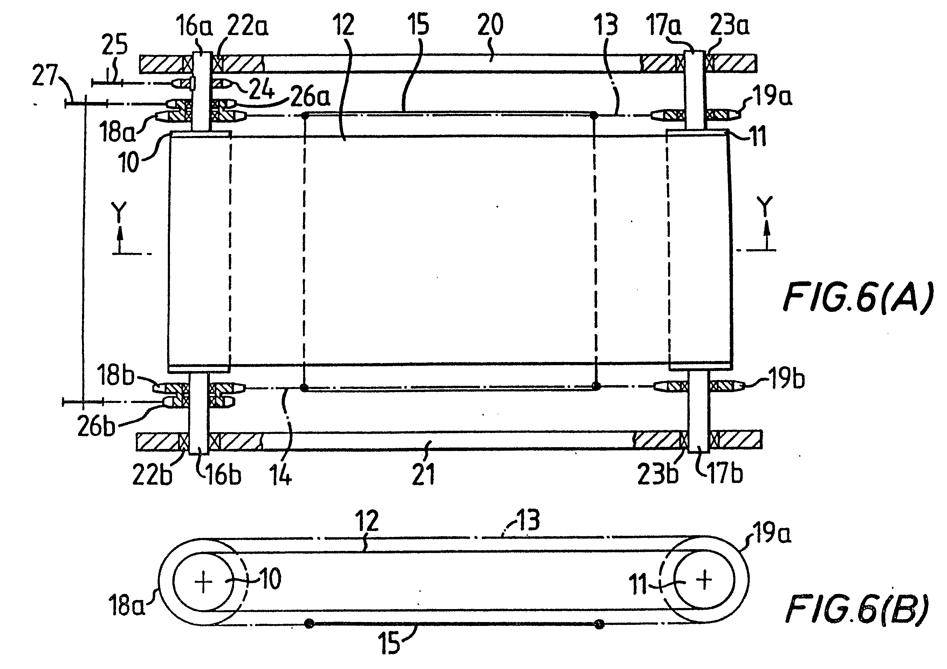

Meanwhile, the batch A of articles is conveyed to the next stage by the conveyors 6a to 6e and the conveyor 8 and, when the distance between the stationary batch B and batch A has reached a predetermined amount as shown in Figure 4(C), the stopper fingers are lowered as shown in Figure 4(D); thereby the batch B of articles is conveyed to the next stage. However, in this example of prior art apparatus, depending upon the timing of rise of the stopper fingers 7a to 7d, it may again happen that the last article $A_{100}$ in the preceding batch A is grouped with the succeeding batch B, or the first article $B_1$ in the succeeding batch B may be grouped with the preceding batch A. Therefore, it is again difficult to achieve accurate grouping of sheet-like articles. In addition, since the conveyance of the sheet-like articles is stopped by the stopper fingers, the margin of overlap between the articles in the succeeding batch B is not uniform as shown in Figure 4(C), and hence there is a disadvantage that alignment of the articles is degraded; thereby confusion or malfunctioning can occur in subsequent steps of the conveyance operation. Moreover, as shown in Figures 4(C) and 4(D), during the period when the succeeding batch B is stopped by the stopper fingers 7a to 7d, the leading edge of one sheet-like article, e.g. $B_6$, may collide against a rear edge of the preceding sheet-like article $B_5$, and so there is a disadvantage in that the conveyance flow of the subsequent sheet-like articles can be disturbed. Furthermore, since it is necessary to rotate the grouping stopper fingers 7a to 7d so that their tip ends are raised to a level higher than the level of the grouping conveyors 6a to 6e, for the purpose of pushing up the sheet-like articles, the said conveyor cannot be formed as an integral belt extending over the entire width. Accordingly, the sheet-like articles are not subjected to a uniform braking force over their entire width, with the disadvantage that alignment of the sheet-like articles on the grouping conveyors 6a to 6e can be disturbed as shown in Figure 5.

Another example of apparatus for grouping articles into batches and conveying the batches is described in French Patent Specification No. 1 393 472. In this apparatus, articles supplied to a station B (using the same reference signs as in the French specification) in the direction of arrow FB come to rest on an endless conveyor A and are then moved by the latter, in direction FA, to a position facing station C. At station C, they are unloaded by suitable pusher means, in direction FC, onto a rack D, where they are grouped into batches before being conveyed to the next treatment phase for the articles. The endless conveyor A has two trains, each comprising two sections each consisting of six articulated carriages. Thus, one train consists of carriage sets 14 to 19 and 20 to 25, whilst the other train consists of carriage sets 26 to 31 and 32 to 37. The trains are individually driven by separate motors so that e.g. while one the articulated carriages 14 to 19 of one train moves stepwise to receive an article on each of its carriages from station B, the other train can be held stationary at the unloading station C. Once the carriages 14 to 19 have been filled, the other train can be driven to clear its carriages 26 to 31 from the unloading station, after which said one train can be driven to move its carriages 14 to 19 up to the unloading station. A restriction with such apparatus is that the alternating sections of carriages 14 to 19, 26 to 31, 20 to 25 and 32 to 37 move in the same path. Hence movement of one train with respect to the other is limited by adjacent carriages sets moving into abutting relationship.

An object of the present invention is to provide improved conveyor apparatus which can accurately group sheet-like articles supplied continuously from a preceding stage into batches without interrupting the conveyance of said articles.

Another object of the present invention is to provide improved conveyor apparatus which can accurately group sheet-like articles supplied continuously from a preceding stage into batches without interrupting the conveyance of said articles.

Another object of the present invention is to provide conveyor apparatus which can accurately maintain the separating point for grouping the sheet-like articles, and in which disturbance in the alignment of the sheet-like articles after grouping is minimized.

According to the present invention, there is provided conveyor apparatus for grouping articles supplied continuously from a preceding stage into batches, characterised in that said separation means comprises a second endless conveyor belt section which is spaced from said first endless belt and arranged for circulation around the latter in the same direction, and in that means are provided whereby the first endless belt and the second belt section may be controlled in speed independently of each other, whereby those articles supplied continuously from the preceding stage are separated into batches without interrupting the conveyance flow of said articles by being loaded in groups alternately on the endless belt and belt section and opening-up a required gap between the groups and thereby obtaining separate batches by an appropriate change in the relative speeds of said endless belt and said belt section.

In order that the above-mentioned and other features and objects of the present invention will become more apparent, one preferred embodiment will now be described with reference to the accompanying drawings, in which:—

Figure 1 is a diagrammatic side view of one example of prior art conveyor apparatus for grouping sheet-like articles into batches,

Figure 2(A) to 2(D) are side views showing various stages of the grouping of sheet-like articles with the apparatus shown in Figure 1,

Figure 3(A) is a plan view showing another example of prior art conveyor apparatus for grouping sheet-like articles into batches,

Figure 3(B) is a diagrammatic side view of the apparatus shown in Figure 3(A) as viewed in the direction of an arrow X,

Figures 4(A) to 4(D) are views similar to Figure 3(B) showing various stages of the grouping of sheet-like articles with the apparatus shown in Figures 3(A) and 3(B),

Figure 5 is a plan view of a stage of the grouping operation with the apparatus shown in Figures 3(A) and 3(B),

Figure 6(A) is a plan view, partly in cross-section, of a conveyor apparatus according to said preferred embodiment of the present invention,

Figure 6(B) is a longitudinal cross-section view of the same apparatus taken along line Y—Y in Figure 6(A), and

Figures 7(A) to 7(E) are diagrammatic side views showing various stages of grouping of sheet-like articles with the apparatus shown in Figures 6(A) and 6(B).

Referring now to Figures 6(A) and 6(B) the preferred embodiment of conveyor apparatus is in the form of a double-belt structure comprising an endless conveyor belt 12 wound around rollers 10 and 11 which are disposed horizontally and in parallel to each other, and a conveyor belt section 15 which is spaced from the conveyor belt 12 and arranged for circulation in the same direction around said endless belt, said spacing from the conveyor belt 12 being at a predetermined distance and the opposite side edges of said belt section 15 being mounted on endless chains 13 and 14, respectively. The length of the conveyor belt section 15, i.e. in the longitudinal direction of the conveyor apparatus, is made shorter than the distance between the axes of the endless belt rollers 10 and 11. However, the relation between the distance between the axes of the rollers 10 and 11 and the length of the conveyor belt section 15 is not limited to the dimensions illustrated in the drawings, but can be determined appropriately depending upon the size and number of the sheet-like articles to be conveyed and grouped into batches.

The endless chains 13 and 14 are wound around pairs of sprockets 18$a$, 19$a$ and 18$b$, 19$b$ respectively which are rotatably mounted on shafts 16$a$, 17$a$ and 16$b$, 17$b$, respectively, for the rollers 10 and 11, and they are individually controllable in speed so that they can drive the belt section 15 in the same direction as the endless conveyor belt 12 at a different speed to said endless belt; these sprockets are of larger diameter than the rollers 10 and 11, sufficient to achieve the required spacing between the endless belt 12 and belt section 15.

The roller shafts 16a, 16b and 17a, 17b are rotatably supported from frames 20 and 21 via bearings 22a, 22b and 23a, 23b and the roller 10 is driven by a driving device 25 through a sprocket 24 fixedly secured to the roller shaft 16a. The roller 11 is driven by the roller 10 via the endless conveyor belt 12. The sprockets 18a and 18b for the conveyor belt section 15 are driven by a driving device 27 through sprockets 26a and 26b, which are integrally formed with the sprockets 18a and 18b, rotatably mounted on the roller shafts 16a and 16b. The driving devices 25 and 27 may be of any appropriate type suitable for the particular application.

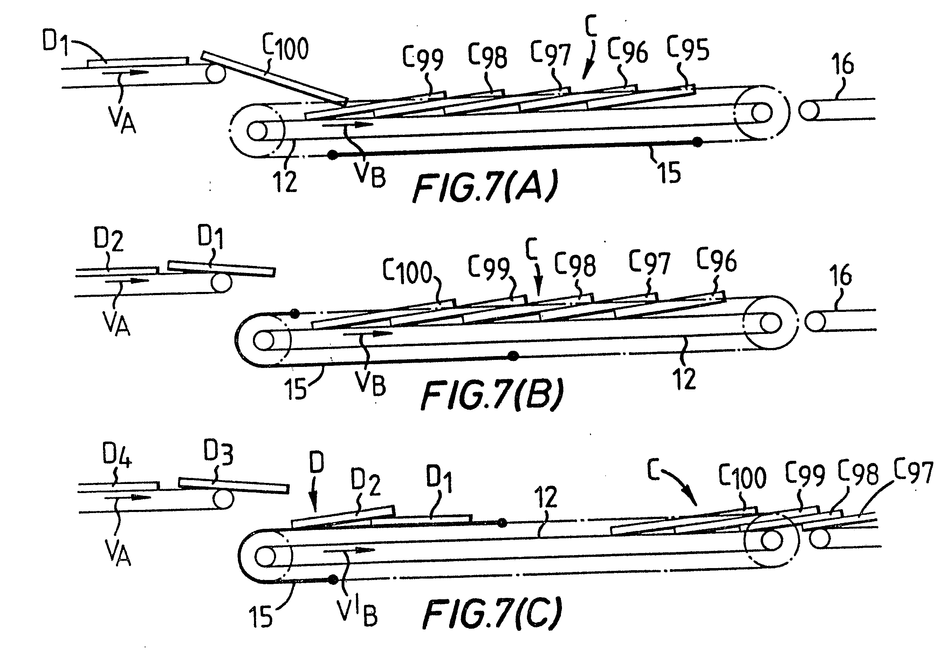

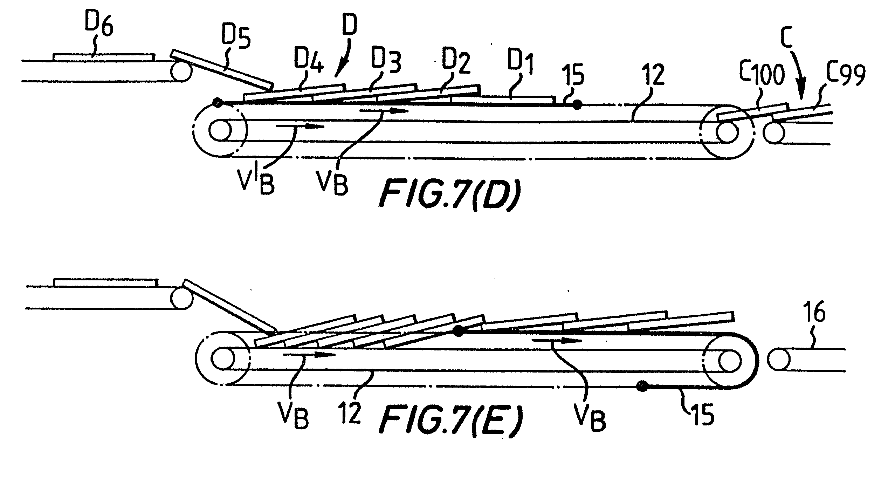

In the following description of the operation of the apparatus shown in Figures 6(A) and 6(B), it is assumed that sheet-like articles to be conveyed by the apparatus are to be grouped into a preceding batch C ($\ldots\ldots C_{95}$, $C_{96}$, $C_{97}$, $C_{98}$, $C_{99}$, $C_{100}$) and a succeeding batch D ($D_1$, $D_2$, $D_3$, $D_4$, $D_5$, $D_6$,...), and that the state of the apparatus in the successive steps in the grouping operations are illustrated in Figures 7(A) through 7(E).

In a steady operating condition, shown in Figure 7(A), the speed of the supply side conveyor is maintained at $V_A$, while speed of the endless conveyor belt 12 is held at $V_B$ where $V_A > V_B$, the conveyor belt section 15 is stationary in a standby state.

Referring to Figure 7(B), as soon as the succeeding batch D of sheet-like articles starts to be fed, the conveyor belt section 15 is controlled in position and a speed so that the leading end portion of said section aligns with the leading edge of the first article $D_1$ in the succeeding batch D. The control may, for example, be effected by means of a D.C. servo motor and an associated mechanism if precise control is required. Otherwise, it could be effected by connecting the conveyor belt section 15 to the supply side conveyor via a clutch if precision is not important. After the first article $D_1$ has been loaded on the belt section 15 as shown in Figure 7(C), the speed of the latter is regulated to the speed $V_B$, see Figure 7(D), while the endless belt 12 is accelerated from the normal speed $V_B$ to a higher speed $V'_B$ as soon as the last sheet-like article $C_{100}$ in the preceding batch C has been loaded on the endless belt 12, see Figure 7(B). Immediately after the preceding batch C has been transferred to a further endless belt conveyor 16 for the subsequent stages of the conveyance operation, the speed of the endless belt 12 is readjusted to its original speed $V_B$ as indicated in Figure 7(E). Thereafter the endless belt 12 and belt section 15 move in synchronisation and between them convey the sheet-like articles in the batch D as shown in Figure 7(E). After the belt section 15 has completed conveyance of the those articles of batch D it supports, the rear end of said belt section moves to a position beneath the endless belt 12. One cycle of operation of the belt section 15 is completed when the front end of said belt section comes to the standby position shown in Figure 7(A) and hence, the belt section is stopped and held stationary in a standby state at this position. It is to be noted that while a double-belt type of conveyor structure is employed and described in the above preferred embodiment, the present invention can be practised in a three or more belt structure, of which the innermost belt is in the form of an endless belt and each of the other belts is in the form of an endless belt section.

It will be appreciated from the foregoing description that, in accordance with the invention, the conveyor apparatus comprises an endless conveyor belt and at least one additional conveyor belt section arranged for rotation at a spaced distance around said endless conveyor belt, so that sheet-like articles supplied continuously to the conveyor apparatus can be grouped into batches by being loaded on to the endless belt or belt section as appropriate without interrupting the conveyance flow of the articles. Therefore the conveyance flow of the articles can be stabilized and said articles can be conveyed with the minimum of disturbance.

Moreover, since the speed of the respective endless belt and belt section can be individually controlled, when a preceding batch of articles has been loaded on the endless belt, the endless belt is then moved at a higher speed so as to open up a gap between the preceding batch and the succeeding batch, which gap can be made sufficiently large to allow enough time for preparation for receiving the next batch of said articles in the subsequent stage. Therefore, in accordance with the present invention, grouping of sheet-like articles can be achieved while accurately maintaining a required separation between batches of articles and with a minimum of disturbance in the alignment of said articles.

It is to be noted that the present invention is applicable to apparatus for grouping large numbers of articles being conveyed into batches (with a required spacing between the successive batches), e.g. corrugated sheet stackers, etc.

## Claims

1. Conveyor apparatus for grouping articles supplied continuously from a preceding stage into batches of the kind comprising a first endless conveyor belt (12) and separation means characterised in that said separation means comprises a second endless conveyor belt section (15) which is spaced from said first endless belt and arranged for circulation around the latter in the same direction, and in that means (24, 26a, 26b) are provided whereby the first endless belt and the second belt section may be controlled in speed independently of each other, whereby articles supplied continuously from the preceding stage are separated into batches without interrupting the conveyance flow of said articles by being loaded in groups alternately on the endless belt and belt section and opening-up a required gap between the groups and thereby obtaining separate batches by an appropriate change in the relative speeds of said endless belt and said belt section.

2. Conveyor apparatus according to Claim 1, characterised in that at least one further endless belt section is spaced from said second endless belt section and arranged, in turn, for circulation around the latter, and in that means are provided whereby said further endless belt section may be individually controlled in speed.

3. Conveyor apparatus according to Claim 1, or Claim 2, characterised in that said endless belt passes around a pair of spaced rollers (10, 11) mounted on respective shafts (16a, 16b, 17a, 17b), and in that opposite side edges of the or each said belt section are mounted on a pair of endless chains (13, 14) passing round respective sprockets (18a, 19a, 18b, 19b) rotatably mounted on said shafts, the sprockets for the or each belt section being of larger diameters than the rollers for the endless belt sufficient to provide a required spacing between said endless belt and the or each belt section.

## Revendications

1. Appareil convoyeur pour grouper en lots des produits individuels amenés en continu en provenance d'une machine de traitement, cet appareil comprenant un premier ruban transporteur sans fin 12 et des organes de séparation, caractérisé en ce que les organes de séparation comprennent un second ruban transporteur sans fin 15 espacé dudit premier ruban transporteur sans fin et agencé pour tourner autour du second dans la même direction, et en ce qu'il comprend des dispositifs 24, 26a, 26b pour régler indépendamment la vitesse des premier et second rubans transporteurs sans fin, de telle manière que les produits provenant en continu de la machine de traitement sont groupés en lots sans interruption du courant de ces produits qui sont chargés en groupes, alternativement sur le premier ruban transporteur sans fin et sur le second ruban transporteur sans fin, en ménageant un intervalle entre les groupes de façon à obtenir des lots séparés, en modifiant de façon appropriée les vitesses respectives du premier et du second ruban transporteur.

2. Appareil convoyeur selon la revendication 1, caractérisé en ce qu'il comporte au moins un troisième ruban transporteur sans fin séparé du second ruban transporteur sans fin, ce ruban étant agencé pour tourner autour du précédent, et des dispositifs pour régler séparément la vitesse de ce troisième ruban.

3. Appareil convoyeur selon l'une quelconque des revendications précédentes, caractérisé en ce que le premier ruban transporteur sans fin tourne autour d'une paire de rouleaux séparés 10, 11 montés sur des axes correspondants 16a, 16b, 17a, 17b, et en ce que les bords opposés du second ruban au moins sont montés sur une paire de chaînes sans fin 13, 14 tournant autour de pignons dentés respectifs 18a, 19a, 18b, 19b rotatifs sur ces axes, ces pignons correspondant à chacun des second et troisième rubans ayant un diamètre supérieur à celui des rouleaux du premier ruban transporteur sans fin, de façon à ménager un espace suffisant entre le premier ruban et chacun des deux autres rubans.

## Patentansprüche

1. Fördereinrichtung zum Gruppieren von kontinuierlich herangeförderten Gegenständen von einer vorausgegangenen Station in Schüben, mit einem ersten endlosen Förderband (12) und einer Trenneinrichtung, dadurch gekennzeichnet, daß die Trenneinrichtung einen zweiten Abschnitt (15) eines endlosen Förderbandes aufweist, das einen Abstand zu dem ersten endlosen Band einnimmt und derart angeordnet ist, daß es um dieses in gleicher Richtung umläuft, daß Mittel (24, 26a, 26b) vorgesehen sind, durch welche das erste endlose Band und der zweite Bandabschnitt bezüglich der Geschwindigkeit unabhängig voneinander geregelt werden können, wobei kontinuierlich aus der vorausgegangenen Stufe herangeförderte Gegenstände in Schübe getrennt werden, ohne daß der Förderfluß der genannten Gegenstände dadurch unterbrochen wird, daß sie auf dem endlosen Band und dem Bandabschnitt alternierend abgelegt werden und ein notwendiger Zwischenraum zwischen den Gruppen geschaffen wird, und daß hierdurch getrennte Schübe mittels der notwendigen Veränderung der Relativgeschwindigkeiten des genannten endlosen Bandes und des genannten Bandabschnittes anfallen.

2. Fördereinrichtung nach Anspruch 1, dadurch gekennzeichnet, daß wenigstens ein weiterer endloser Bandabschnitt von dem genannten zweiten endlosen Bandabschnitt in einem Abstand angeordnet und seinerseits zwecks Umlaufs um das letztgenannte herum angeordnet ist, und daß Mittel vorgesehen sind, durch welche der genannte weitere endlose Bandabschnitt bezüglich der Geschwindigkeit für sich alleine geregelt werden kann.

3. Fördereinrichtung nach Anspruch 1 oder 2, dadurch gekennzeichnet, daß das genannte endlose Band um ein Paar von in gegenseitigem Abstand angeordneten Walzen (10, 11) herumläuft, die jeweils auf Wellen (16a, 16b, 17a, 17b) gelagert sind, und daß einander gegenüberliegende Seitenkanten des Bandabschnittes oder eines jeden der genannten Bandabschnitte auf einem Paar endloser Ketten (13, 14) montiert sind, die auf zugeordneten Kettenrädern (18a, 19a, 18b, 19b) rotierbar auf den genannten Wellen gelagert sind, wobei die Kettenräder für jeden Bandabschnitt von größerem Durchmesser als die Walzen des endlosen Bandes sind, derart, daß ein notwendiger Zwischenraum zwischen dem genannten endlosen Band und dem Bandabschnitt oder den Bandabschnitten geschaffen wird.

FIG.1

FIG.2(A)

FIG.2(B)

FIG.2(C)

FIG.2(D)

FIG.3(A)

FIG.3(B)

2

B3   B2

5

B1   A100   A99   A98

6a—6e

7a—7d

FIG.4(A)

8

B4   B3

5

B2   B1   A100   A99   A98

6a—6e

7a—7d

FIG.4(B)

8

B7

B6   B5   B3
B4   B2
B1   A100

5

6a—6e   7a—7d   FIG.4(C)

8

B8   B7

B6   B5   B4   B3   A100
B2
B1

5

6a—6e   7a—7d   FIG.4(D)

8

B1a   7a

B1b   7b
7c

B1c   7d

FIG.5

FIG.6(A)

FIG.6(B)

0 007 231

FIG.7(A)

FIG.7(B)

FIG.7(C)

0 007 231

FIG.7(D)

FIG.7(E)

0 007 231